# EUROPEAN PATENT APPLICATION

(11) **EP 0 652 519 A2**
(43) Date of publication of application: **10.05.1995**
(21) Application number: 94308109.1
(22) Date of filing: 03.11.1994
(51) Int. Cl.: G06F 11/34, H04L 12/26

(54) **Monitoring of data stream connections in a computer network**

(30) Priority: 04.11.1993 US 147321
(71) Applicant: International Business Machines Corporation, Armonk, N.Y. 10504 (US)
(72) Inventor: Chang, David Yu, Cedar Park, Texas 78613 (US)
(74) Representative: Moss, Robert Douglas

(57) **Abstract**

Provided are systems and methods for monitoring data stream connections in a parallel server network composed of multiple workstations. A user defined application task for the network is decomposed/ subdivided into multiple work units/subtasks individually distributed for relatively concurrent execution in selected workstations. The monitor detects and provides to the user data stream connection status information (29) about the complete system as the application is being executed. The monitor process is executed as a daemon on the coordinate workstation accessed by the user. Node registration requests from the subordinate workstations to the coordinate workstation provide the coordinate workstation daemon process with information regarding the status of data streams in subordinate workstations.

## Description

### Background of the Invention

The present invention relates generally to computer networks. More particularly, the invention is directed to systems and methods for monitoring the status of data stream connections in a parallel server network.

The parallel server is a relatively new concept in the configuration of workstations or computers into networks. In general, the parallel server is a group of workstations connected and operated to execute in parallel a single application program, often referred to as a task. The application program is executed by decomposing the task represented by the program into numerous work units which are distributed to and executed in parallel by the interconnected group of workstations.

The strategy used to execute the application task in the multiple work units is based upon an execution plan defined by the application compiler, in the form of an execution strategy for the parallel server system. The execution strategy defines the flow of control and the flow of data within the parallel server system during the execution of the application task. The information contained in the control flow defines how and when the application task is decomposed and distributed to the workstations in the parallel server system. On the other hand, the information in the data flow defines how and when the data is passed between the workstations in the system. In the parallel server system, the compiler defines the control flow and data flow within the system at the time the application task is compiled.

Given the complexity of parallel server type networks, data flow models of the parallel server are commonly defined through the use of data port concepts. With this model of the parallel server, data is always transmitted through a data port in a parallel server. The data port can be used to send or receive data. In a further aspect of this model and convention, a data port can serve as the termination for one or more data streams. Thereby the data stream becomes the logical link between two data ports.

An application task executing on a parallel server system will fail if any of its data streams do not connect to the appropriate data ports. Unfortunately, it has proven to be difficult to determine when a data stream has either failed to make, or has lost, a connection in the context of a complicated parallel server system. In part, this difficulty is attributable to the fact that data ports are created dynamically according to the execution strategy defined by the compiler, and further because the flow of execution within the parallel server occurs at multiple layers, each layer providing a degree of isolation from the underlying execution activities.

Conventional trace tools are ineffective at discovering unconnected data streams during the actual execution time, often referred to as runtime. The inadequacy of trace tools is attributable to the fact that the trace tool logs are generated and stored locally in the numerous workstations which make up the parallel server system.

Thus there exists a need for systems and methods by which the data stream connection status of application tasks executing on a parallel server system can be monitored during the dynamics of execution.

### Summary of the Invention

The present invention provides a data stream connection monitor for a parallel server system, which monitor provides a system user with resources suitable to monitor the data stream connections of an application task being executed on the parallel server system. A method of monitoring connections is also provided.

In one form, the invention provides a network of subordinate and coordinate workstations configured to execute a decomposed application, with a connection monitor comprising a means for executing a monitoring process on a coordinate workstation, a means for determining connection status of data streams on subordinate workstations, and a means for transmitting the connection status in subordinate workstations to the monitor process in the coordinate workstation.

A preferred embodiment of the invention includes means for selectively registering and deregistering subordinate workstations with the monitoring process in the coordinate workstation, and means for creating control blocks in subordinate workstations responsive to subtasks of the decomposed application received from the coordinate workstation.

According to a second preferred embodiment of the invention, a data stream monitor process executing on the coordinate workstation includes a background or daemon process which tracks connection status requests from subordinate workstations. When an application work unit commences execution in a subordinate workstation, a subordinate workstation node registration request is sent to the coordinate computer. The origins and status of such registrations are monitored by the coordinate workstation to track the data stream connection status in the subordinate workstations. At periodic increments, the status as detected in the coordinate workstation is displayed or otherwise presented to the system user at the coordinate workstation. The connection status is available in real time, with information particularizing data stream status, port identification, node information, time information, and configuration information.

An embodiment of the invention will now be described in more detail, by way of example, with reference to the accompanying drawings in which:

Fig. 1 is a schematic diagram of a parallel server network.

Fig. 2 defines the schematic images used in the ensuing drawings.

Fig. 3 schematically depicts the operations in a parallel server network.

Fig. 4 schematically depicts data stream linking of node processes.

Fig. 5 schematically depicts a disconnected data streams with alarms display, presented according to an embodiment of the present invention;

Fig. 6 schematically depicts a display showing connection status matrices, presented according to an embodiment of the invention;

Fig. 7 schematically depicts a display showing partner node status matrices, presented according to an embodiment of the invention;

Fig. 8 schematically depicts a data port connection status display, presented according to an embodiment of the invention; and

Fig. 9 schematically depicts a data stream connection status display, presented according to an embodiment of the invention.

### Description of the Preferred Embodiment

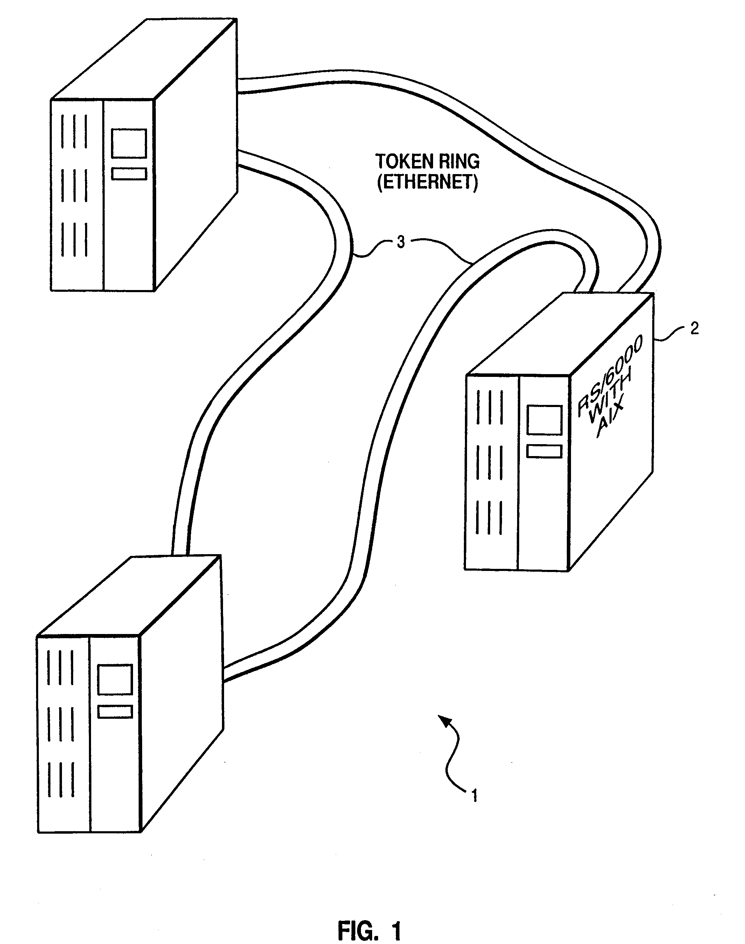

Fig. 1 depicts the general context within which the invention is practiced. As shown, there exists a network, generally at 1, including a multiplicity of workstations 2 (a representative example being the RISC System/6000™ workstation with the AIX™ operating system as commercially available from IBM Corporation) interconnected through a token ring, or the like, network 3 to create a parallel server system. The parallel server system decomposes an application task into multiple processes individually executed by the multiple network workstations.

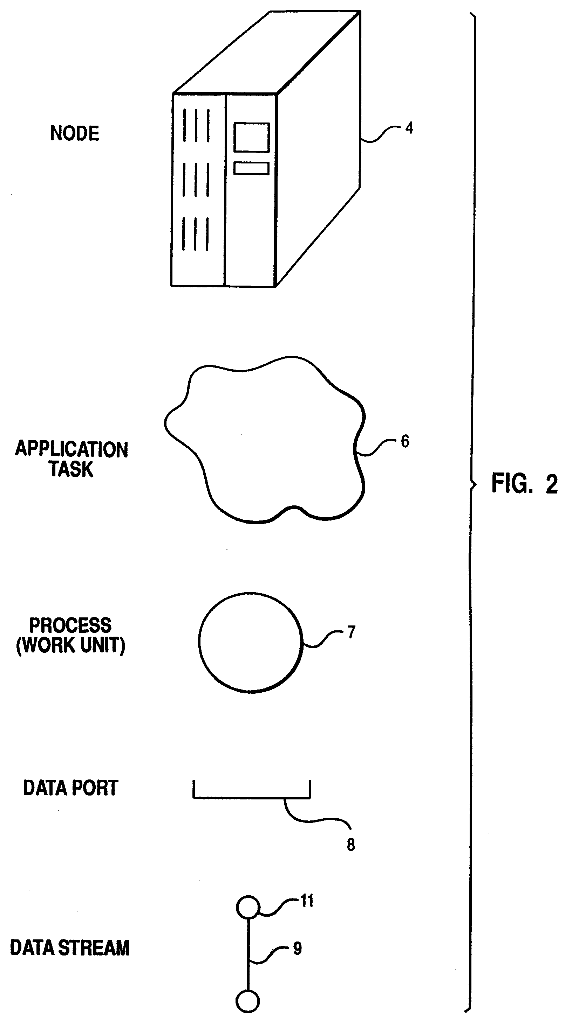

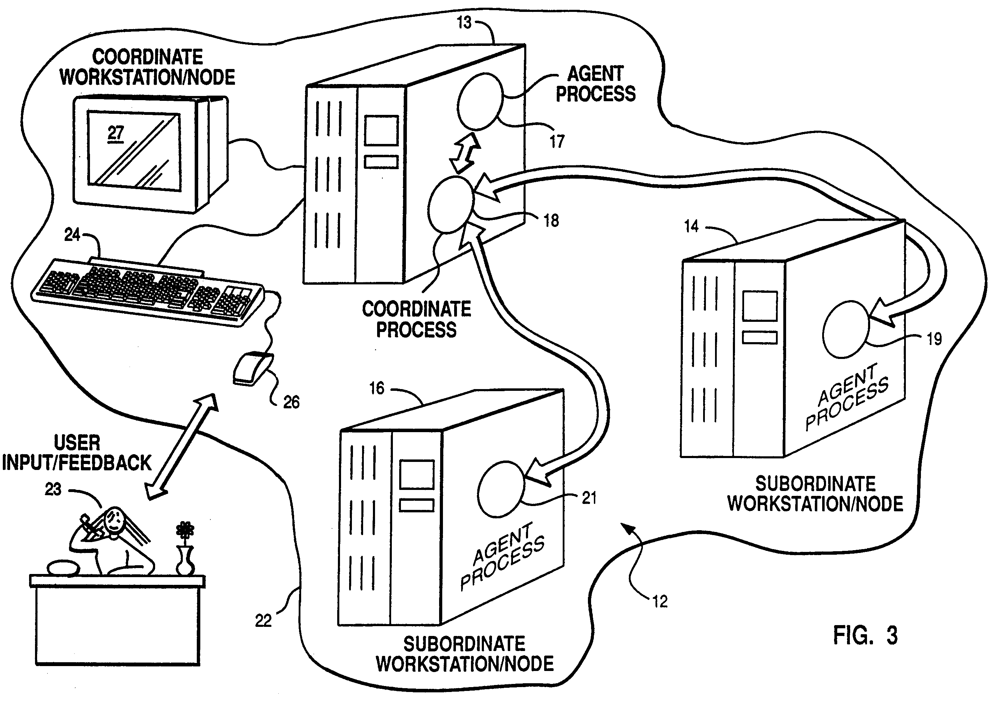

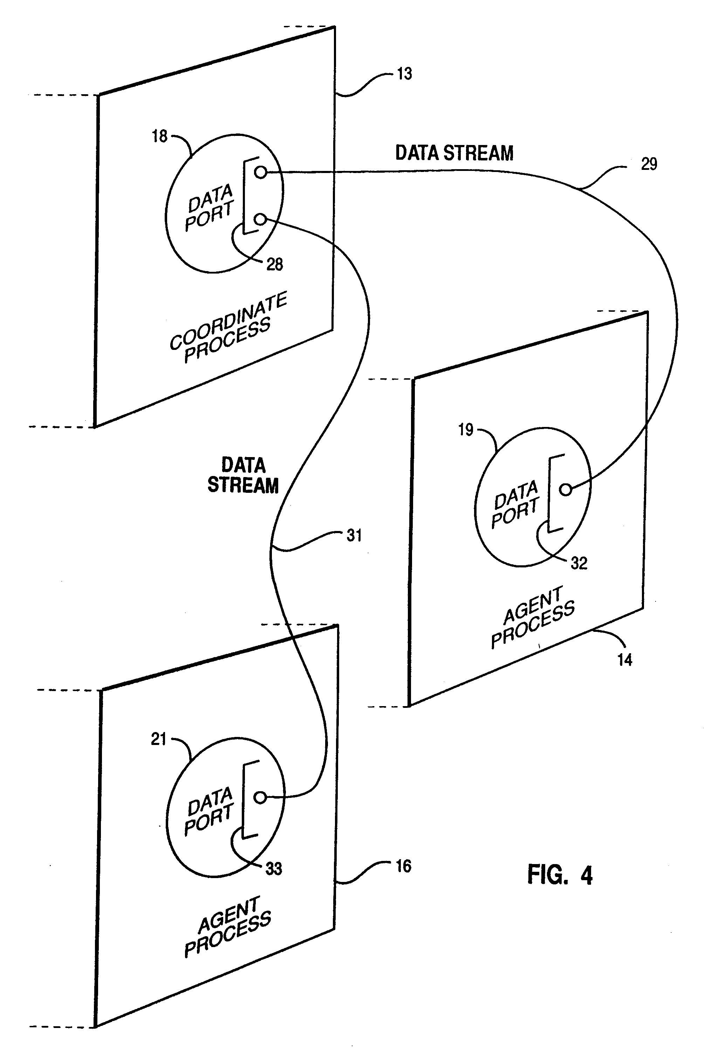

Fig. 2 relates by general hierarchy the graphical images used in succeeding Figs. 3 and 4. These include node workstations 4, a composite application task 6, workstation individualized processes 7 (corresponding to the work units of the application task), node workstation data ports 8, and network data streams 9, with associated data stream ends 11.

The objective of the system user is to monitor activities at the data stream level, the level at which the data streams interact through data ports during the execution of processes which are parts of an overall application task concurrently being executed on the multiple workstation nodes. This arrangement is schematically depicted in Fig. 3. The embodiment in Fig. 3 includes a network, generally at 12, composed of three node workstations, 13, 14 and 16, and various workstation local processes, 17, 18, 19, and 21, all configured to perform application task 22. In this context, the objective is to allow user 23 to selectively interact through keyboard 24 or mouse 26 in selecting the data stream information depicted on video display 27 of workstation 13. The application task 22 of the parallel server system 12 is executed by the multiple processes in the multiple workstation nodes. The execution plan is generated by the application task program compiler, which compiler defines the data flow scheme during the execution of the application task. The data flow scheme defines the data streams between each of the processes running in the multiple workstations. A related execution plan defines when and how to create the data streams.

The execution plan specifies which process data is sent and received through which data ports. The data link configuration is part of the control flow of the execution strategy and includes broadcast, multicast or direct (point to point) connections. For broadcast or multicast data ports, a data port may end multiple data streams. For direct data ports, only one data stream end exists at one time. The application data is passed between processes through the data streams. In the actual implementation, each data stream end is a message buffer or a "mailbox". Data ports can be created to communicate data between processes in different nodes or in the same node workstation. Each data stream has a globally unique identifier which is specified at the time of compilation. The execution plan followed by the compiler defines the server processes which create the data ports and determine the sending and receiving workstations. Since the processes execute asynchronously on the sending and receiving workstations, the sending and receiving data ports are likewise created asynchronously.

The relationships described above can be identified in Figs. 3 and 4. Note in Fig. 3 that the coordinate workstation/node represented by workstation 13 is executing both a coordinate process 18 as well as an agent process 17. On the other hand, subordinate workstation/nodes 14 and 16 each correspondingly execute respective agent processes 19 and 21. Fig. 4 illustrates communication at the data port level. Note that coordinate process 18 in workstation/node 13 has a data port 28 which serves as the end point for two different data streams 29 and 31. The opposite end of data stream 29 ends in data port 32 of agent process 19 within node 14, while the other end of data stream 31 terminates in data port 33 of agent process 21 executing in workstation/node 16. This represents the level of information sought by user 23 as earlier depicted in Fig. 3.

The attributes of the data ports depicted in Fig. 4 are broad enough to encompass all contemplated forms of communication, including, but not limited to, sending/receiving, active/passive, and data link configurations. In the broadest sense, a sending data port is created in a form suitable to send data to other data ports, while a receiving data port is created in a form suitable to receive data from other data ports. An active data port initiates data stream connections, while the passive port waits for the partner data ports to initiate data stream connections.

Referring again to Fig. 3, the objective is to provide user 23 with information regarding the status of the data streams used during the execution of the application task, generally 22, by the multiple processes, 17, 18, 19 and 21, in the workstations of the parallel server system. User 23 interacts with coordinate workstation 13 to monitor and manage the application task. As shown, coordinate workstation 13 manages the execution of the application task through coordinate process 18 resident on the coordinate workstation while the work units themselves are being executed by agent processes 17, 19 and 21. Agent process 17 is being executed on coordinate workstation 13, while agent processes 19 and 21 are being executed on subordinate workstations of the parallel server system. Thus, a single workstation can execute both a coordinate process and an agent process. Coordinate process 18 sends execution requests to agent processes initiating in each agent process the execution of a work unit of the multiple work units which make up application task 22. In this way, an application task is divided and distributed for parallel execution while being centrally managed.

For complicated application tasks, nested levels of subordinate workstations are used. With this architecture, the Nth level subordinate workstation sends execution requests to the N+1 level subordinate workstations. The transfer of data between the agent processes in the multilevel hierarchy is also through data ports. Data streams are subject to failure if any data port is blocked or a data stream connection fails to be completed. As the number of workstations and levels increases, the complexity mandates the need for a system, method and program by which user 23 can acquire dynamic status information so that he or she can respond with network management tools provided on the coordinate workstation.

According to one embodiment of the present invention, the data stream connection monitor for the parallel server system is invoked at coordinate workstation 13 (Fig. 3) through the issuance of a command such as display connection (DSPCON). The context of the DSPCON command is as follows:
DSPCON APPL-ID OPT-FLAG
APL-ID: The Application Task ID
OPT-FLAG: Display Option Flag
- S:: Show application connection status
- N:: Display every node of the application
- A:: Display connected data stream with alarms
- E:: Display connection status matrix

When the display option flag "S" is selected, the current data stream connection status of the application task is shown. The data stream connection status can be connected, disconnected, and disconnected with alarm.

The following is an example of the information appearing on display 27 in Fig. 3:
Application ID: 550
Data Stream Connection Status: Connected

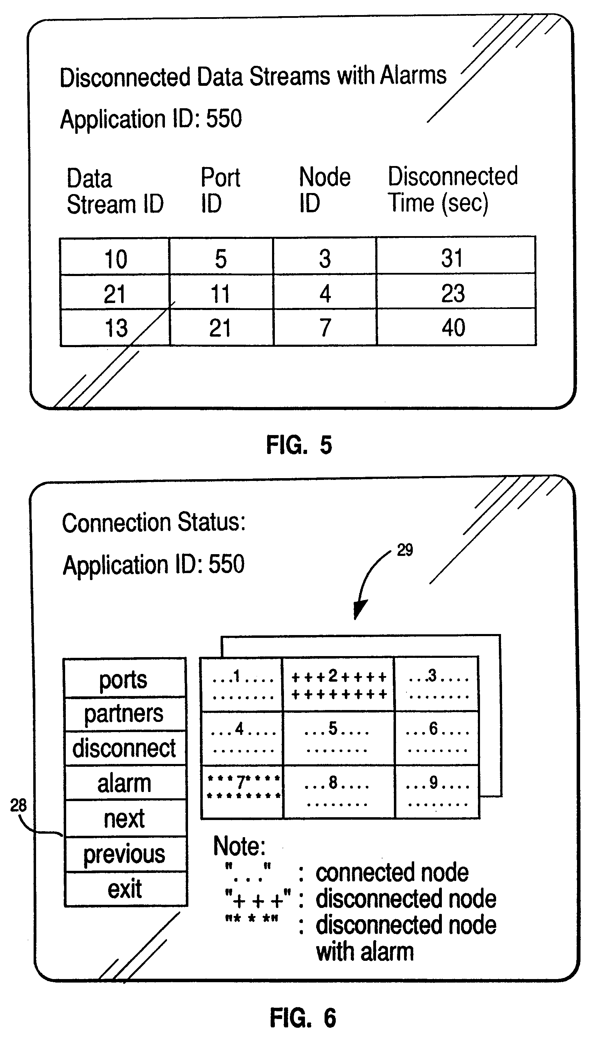

If the user chooses display option flag "A", the disconnected data streams with alarms information is depicted on video display 27. The matrix in Fig. 5 identifies disconnected data streams with alarms by data stream id, port id and node id. Furthermore, the matrix includes information regarding the time at which the disconnect occurred.

If display option flag "N" is selected, the connection status of every workstation participating in the execution of the application task is displayed in a paged connection status matrix format. An example of that format appears on Fig. 6, and includes both a selectable menu 28 and a group of multiple overlapping pages, generally at 29. Each cell in each matrix 29 represents a workstation (node) in the parallel server system. In a preferred form, the workstations of different connection status are displayed in different colors for immediate recognition. As shown, at least three groups of workstations are identified: those having connected nodes, those having disconnected nodes, and those having disconnected nodes with alarms. The connected nodes are workstations with all data streams connected. Those of the workstations classified as disconnected have at least one disconnected data stream. The alarm nodes represent workstations with at least one disconnected data stream with alarm. The overlapping page format of matrices 29 allow the user to consider multiple pages of workstation matrices in those situations where many computers participate in the execution of the application task.

Menu 28 in Fig. 6 provides a group of user selectable object functions for managing connection status matrices 29. When the "next" function is selected, such as by double click action of mouse 26 (Fig. 3), the next underlying status matrix is brought to the top. When the "previous" function is selected, the previous matrix is brought to the top. When the "alarm" function is selected, only the disconnected nodes with alarm are displayed in the status matrices 29. When the "disconnect" function is selected, only the disconnected nodes without alarms are displayed in status matrices 29.

The "partner" function is designed to display the relationship between a chosen node and its data stream partner. See Fig. 4. When a cell from within matrices 29 is selected by action of the mouse, an ensuing enablement of the "partner" function causes the partner node of the chosen node to be displayed in a partner node status matrix. Again, multiple status matrices for such partner arrangements may be stacked in the manner of matrices 29. If a node cell selection is followed by a "ports" selection from menu 28, the data port connection status of the node is displayed in a separate window.

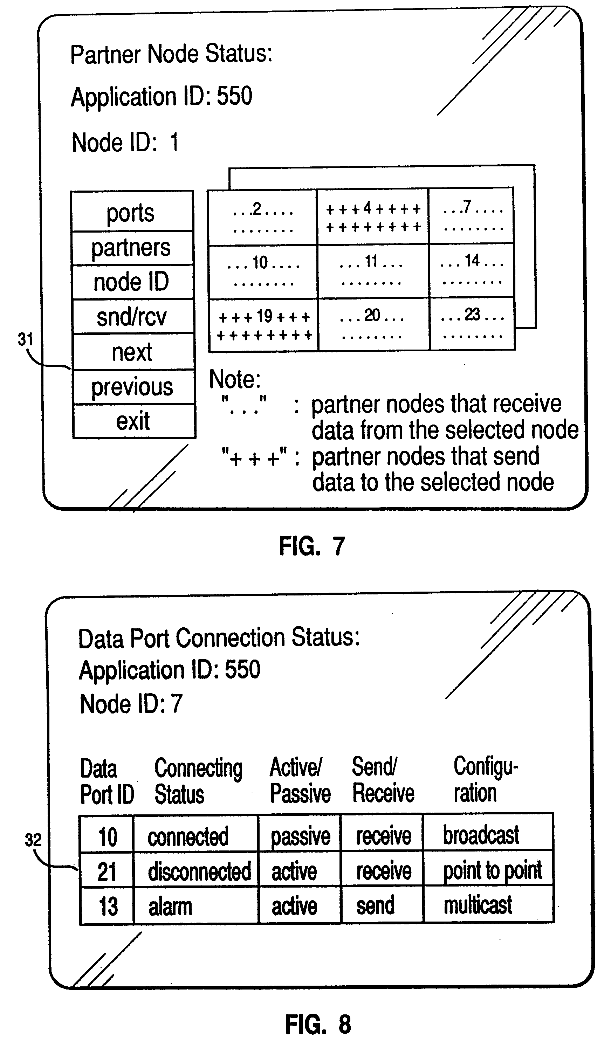

An example partner node status matrix of the type described above is depicted in Fig. 7. The object functions for the menu of the partner node status matrix functions corresponding to "ports", "partner", "next", "previous" and "exit" are inherited from the connection status matrix. The "snd/rcv" function requests the partner node status matrix to display the partner nodes that send data to the selected node. The "node id" function requests the partner node status matrix to display the partner node by node id. The "partner" function allows the user to browse the connection status among related workstations.

The data port connection status matrix 32 depicted in Fig. 8 is obtained, as described earlier, through a combination of a node cell selection followed by a "ports" function selection. The resulting matrix provides information regarding data ports with connected data streams only. Recall that a disconnected data port is one having at least a single disconnected data stream and no data stream with disconnected time exceeding the alarm setting. An alarm data port is a data port with at least one disconnected stream with alarm. Note that matrix 32 provides, in relation to each data port id, a connection status, whether the port is active or passive, whether the data port is sending or receiving, and, lastly, the configuration of the data port.

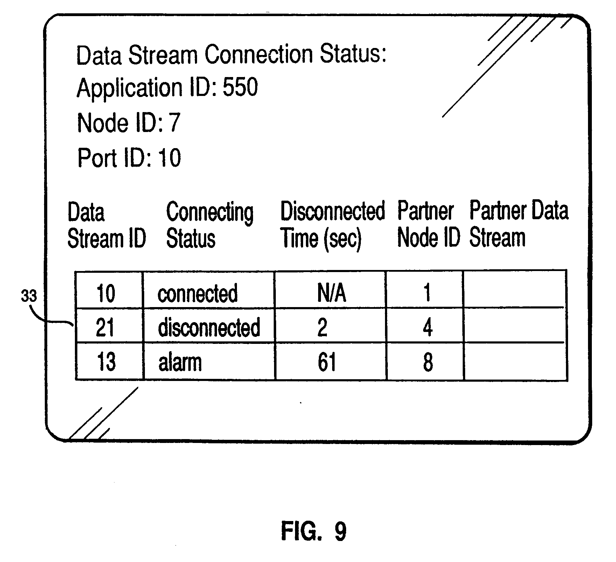

Fig. 9 depicts the content of the display for a matrix providing the data stream connection status of an application task. If a data stream field is selected from the matrix, its partner data stream connection is displayed in the "partner data stream" field. The partner data stream status will also be acquired from the partner workstation/node. As shown Fig. 9, the data stream connection status matrix includes the data stream id, connection status, disconnect time, partner node id and partner data stream information.

To implement this data stream connection monitor, a daemon process is executed on coordinate workstation 13 (Fig. 3). The daemon process is not accessible to the keyboard or visible to the user. The daemon process collects connection status information from all workstations executing agent processes which contribute to the completion of the application task. Each time an application task is executed in a subordinate workstation of the system, a node request is sent to the coordinate workstation and is recorded by the data stream monitor process. Periodically, the data stream monitor process updates the status information in the coordinate workstation and displays that information in the manner described earlier responsive to a user selection. The information displayed to the user is thereby updated in keeping with the dynamics of the execution of the application task.

The data stream connection monitor is implemented through data structures in the coordinate and subordinate workstations together with runtime processes and user interface processes.

The coordinate computer maintains the link list of the application task control blocks. Each application task control block contains the link list of the participating node control blocks. The application task control block and the node control block are defined as follows:

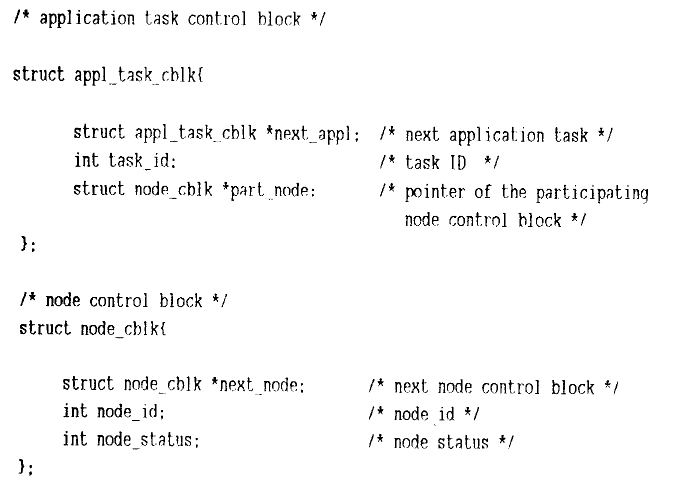

An application task control block is created when an application task is executed in the coordinate workstation. All application task control blocks are linked together. A global variable is defined to point to the head of the application task control block link list.

When a work unit (sub-task) of the application task is processed by an agent process in a subordinate workstation the first time, the agent process sends a message to the coordinate workstation to register the subordinate workstation in the coordinate workstation. The data stream monitor processes the node registration message by creating a node control block and adding it to the participating node list of the application task.

Both the application task control blocks and the node control blocks are stored in shared memory. Thereby, every system process in the coordinate workstation can gain access to the information.

The subordinate workstation maintains a list of application sub-task control blocks. The application sub-task control block of an application is created when the first sub-task of the application task is executed in the subordinate workstation. The application sub-task control block contains the application task id, the coordinate workstation number, its partner node list, its data port list, and its node connection status. The application sub-task control block is defined as follows:

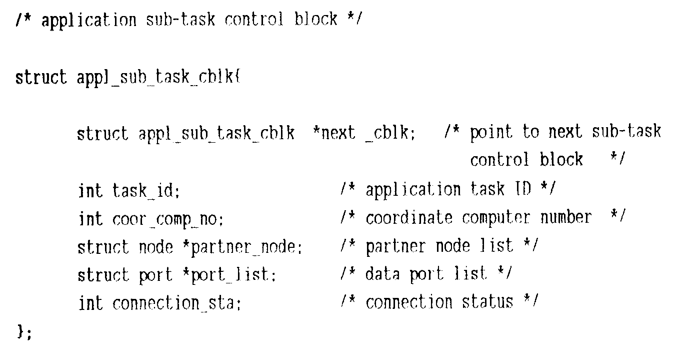

The partner node list is a linked list of the node structure of the partner node of the subordinate workstation. A partner node is created when the first data stream is created between the subordinate workstation and the partner node. The node structure is defined as follows:

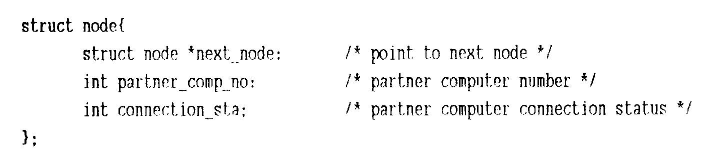

Each data port has a data port control block. The data port control block contains the data port id, connection status of the data port, and other configuration data. The data port control block is defined as follows:

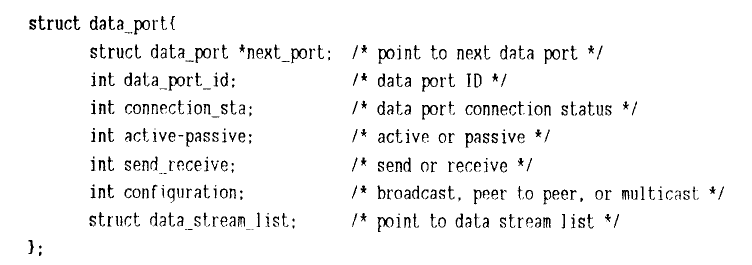

Each data port is composed of a list of data streams. Each data stream has a data stream control block. The data stream control block contains the data stream id, the connection status of the data stream, the elapse time of the disconnected data stream, and the partner node number of the data stream. The data stream control block is defined as follows:

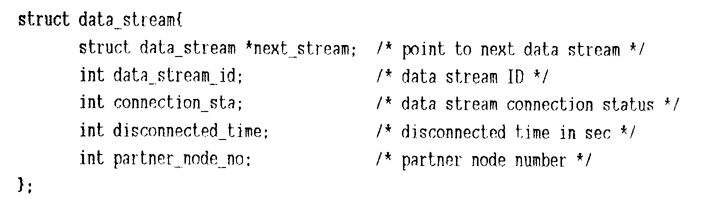

A data stream monitor process is spawned in each workstation of the parallel server system when the parallel server system is started. The function of the data stream monitor process is to respond to data stream monitor messages. The types of data stream monitor messages are as follows:
o Register a subordinate computer
o Update the status of a subordinate computer
o Deregister a subordinate computer
o Request the partner node list
o Request the list of partner nodes that send data to the selected node
o Request the data port list
o Request the data stream list

When the coordinate workstation of the parallel server system receives an application task request, the application task is executed according to the execution plan of the application task. The execution plan of the application task is created by the parallel server compiler. The execution plan defines how to create the data ports and the data streams of the application task. The application task control block of are created in shared memory. As the execution plan of the application task progresses, the data port control blocks and the data stream control blocks are created and added to a link list.

When the subordinate workstation receives the first application sub-task request from the coordinate workstation, an application sub-task control block is created in the shared memory of the subordinate workstation. In addition, a message is sent from the subordinate workstation to the coordinate workstation to register the subordinate workstation in the coordinate workstation. This request message is intercepted by the data stream monitor process in the coordinate workstation. The data stream monitor process adds the subordinate workstation to the node list of the participating nodes. When the last application sub-task is completed in the subordinate workstation, the subordinate workstation sends a message to the coordinate workstation to deregister the subordinate workstation in the coordinate workstation.

The connection processing of a data stream is started by the active data stream. The active data stream end sends an open data request to the partner workstation at the passive data stream end. If an acknowledgement message is not received by the workstation at the active stream end from the workstation at the passive stream end, the status of the data stream is classified as disconnected. If any one of the data stream of a data port are disconnected, the connection status of the data port is classified as disconnected. If any port in the subordinate workstation is disconnected, the connection status of the subordinate workstation is classified as disconnected. When the connection status of a subordinate workstation is changed, a message is sent from the subordinate workstation to the coordinate workstation to update the connection status of the subordinate workstation the coordinate workstation.

There exists in each workstation a connection status process to monitor the connection status of each data stream which has been disconnected. The connection status process runs periodically and updates the elapsed time of each disconnection. If the elapsed time of the disconnected data stream exceeds the alarm setting time, the status of the data stream connection is changed from "disconnected" to "alarm".

A user interface suitable for the data stream monitor to depict by the display the connection status of every node in the system can be accomplished through the following pseudo code sequence:
for every node in the link list of the participating node control blocks
if the node status is "connected" display its cell with the color that is assigned to the connected node
if the node status is "disconnected" display its cell with the color that is assigned to the disconnected node
if the node status is "alarm" display its cell with the color that is assigned to the alarm mode

A user interface for displaying the partner node connection status involves the use of pseudo code as follows:
if the selected node is the subordinate computer
then send a message to the subordinate computer to request the partner node list
for every node in the part node list
if the node status is "connected" display its cell with the color that is assigned to the connected node
if the node status is "disconnected" display is cell with the color that is assigned to the disconnected node
if the node status is "alarm: display its cell with the color that is assigned to the alarm node

Pseudo code to process the disconnected node connection user interface is as follows:
for every node in the link list of the participating node control blocks
if the node status is "disconnected" display its cell with the color that is assigned to the disconnected node

User interface pseudo code to create an alarm node connection status display is as follows:
for every node in the link list of the participating node control blocks
if the node status is "alarm" display its cell with the color that is assigned to the alarm node

The data port status user interface is generated from pseudo code as follows:
if the selected nod is the subordinate computer
then send a message to the subordinate computer to request the data port list
for every data port in the data port list
print the port ID, the connection status, and the configuration data of the data port
Pseudo code to implement the user interface of the data stream status is as follows:
if the selected node is the subordinate computer
then send a message to the subordinate computer to request the data stream of the data port
for every data stream in the data stream list
print the data stream ID, the connection status, the disconnected time if the data stream is disconnected, and the partner node ID of the data stream

The data stream connection monitor system, method and program product described herein provides data stream connection status information to the user of a complicated parallel server system. Matrices relate time, connection status, activity status, send/receive status, configuration, data stream identification, workstation identification, port identification, and, partnership status in a user friendly format with resource for hierarchical evaluation and organization.

## Claims

1. A connection monitor system, for a network of subordinate and coordinate workstations configured to execute a subdivided application, the connection monitor system comprising:
means for executing a monitoring process on a coordinate workstation;
means for determining the connection status of data streams in subordinate workstations;
means for transmitting the connection status in subordinate workstations to the monitor process in the coordinate workstation.

2. A system according to Claim 1, further comprising;
means for selectively registering and deregistering subordinate workstations with the monitoring process in the coordinate workstation.

3. A system according to Claim 2, wherein the means for selectively registering and deregistering subordinate workstations is respectively responsive to assignment of subtasks by the coordinate workstation and to completion of subtasks by the subordinate workstations.

4. A system according to Claim 2 or Claim 3, wherein the means for executing a monitoring process is adapted to monitor the connection status of registered subordinate workstation data streams.

5. A system according to any one of claims 1 to 4, wherein the means for determining connection status comprises a means for creating control blocks in subordinate workstations responsive to subtasks received from the coordinate workstation.

6. A system according to Claim 5, wherein the means for creating control blocks in subordinate workstations is adapted to form the control blocks in a shared memory of the subordinate workstations.

7. A method for monitoring the status of connections in a network of subordinate and coordinate workstations configured to execute a subdivided application, comprising the steps of;
executing a monitoring process on a coordinate workstation;
determining connection status of data streams in subordinate workstations; and
transmitting the connection status in subordinate workstations to the monitor process in the coordinate workstation.

8. A method according to Claim 7, further including the step of;
selectively registering and deregistering subordinate workstations with the monitoring process in the coordinate workstation.

9. A method recited according to Claim 8, wherein the step of selectively registering and deregistering subordinate workstations is selectively responsive to the assignment of subtasks by the coordinate workstation and the completion of subtasks by the subordinate workstations.

10. A method according to Claim 8 or Claim 9, wherein the step of executing a monitoring process monitors the connection status of registered subordinate workstation data streams.

11. A method according to any one of Claims 7 to 11, wherein the steps of determining connection status includes the creation of control blocks in subordinate workstations responsive to subtasks received from the coordinate workstation.

12. A method according to Claim 11, wherein the step of creating control blocks in subordinate workstations forms the control blocks in a shared memory of the subordinate workstations.
